# EUROPÄISCHE PATENTSCHRIFT

(11) **EP 2 705 340 B1**
(45) Veröffentlichungstag und Bekanntmachung des Hinweises auf die Patenterteilung: **20.05.2015**
(21) Anmeldenummer: 12725709.5
(22) Anmeldetag: 30.05.2012
(51) Int. Cl.: G01K 11/32, F02C 9/00, G01K 13/02

(54) **TEMPERATURSENSORANORDNUNG**
TEMPERATURE SENSOR ARRANGEMENT
ENSEMBLE CAPTEUR DE TEMPÉRATURE

(30) Priorität: 17.06.2011 DE 102011077723
(43) Veröffentlichungstag der Anmeldung: 12.03.2014
(73) Patentinhaber: Siemens Aktiengesellschaft, 80333 München (DE)
(72) Erfinder: BOSSELMANN, Thomas, 91080 Marloffstein (DE); BRÜTSCH, Emil, 51467 Bergisch Gladbach (DE); WILLSCH, Michael, 07745 Jena (DE)
(86) Internationale Anmeldenummer: PCT/EP2012/060168
(87) Internationale Veröffentlichungsnummer: WO 2012/171799

(56) Entgegenhaltungen:
- DE-A1-102010 016 825
- GB-A- 2 441 408
- US-A1- 2009 169 150

## Beschreibung

Die Erfindung betrifft eine Temperatursensoranordnung für den Einsatz in einer Gasturbine. Die Temperatursensoranordnung basiert auf Bragg-Gitter-Messstellen in einem Lichtwellenleiter.

Bei Gasturbinen, insbesondere bei solchen mit so genannten Silo-Brennkammern, ist es interessant, einen Indikator für eine Störung von Verbrennungsvorgängen an einem oder mehreren der Brenner zu haben. Lokale Überhitzungen können nämlich beispielsweise negative Auswirkungen auf die Lebensdauer der Gasturbine haben. Da die direkte Messung der Temperaturverteilung bei den Brennern aufgrund der hohen Verbrennungstemperaturen schwierig ist, wird die Temperaturmessung indirekt durch eine Messung der Abgastemperaturverteilung durchgeführt. Das ist möglich, da sich die Temperaturverteilung im Brennerbereich über den Gasstrom bis in den Abgaskanal qualitativ fortsetzt.

Aus den Dokumenten DE 10 2010 016825 A1, GB 2 441 408 A und US 2009/169150 A1 sind Anordnungen der eingangs genannten Art zur Temperaturmessung bekannt.

Es ist Aufgabe der vorliegenden Erfindung, eine Messanordnung anzugeben, mit der eine genaue Erfassung von Abgastemperaturen in einer Gasturbine ermöglicht ist.

Diese Aufgabe wird durch eine Messanordnung mit den Merkmalen von Anspruch 1 gelöst. Die abhängigen Ansprüche betreffen vorteilhafte Ausgestaltungen der Erfindung.

Die erfindungsgemäße Temperatursensoranordnung für eine Gasturbine umfasst ein Trägerrohr mit einer Bohrung in axialer Richtung, ein in der Bohrung axial beweglich angeordnetes Führungselement sowie einen im Führungselement angeordneten Lichtwellenleiter mit wenigstens einer Bragg-Gitter-Messstelle.

Mit anderen Worten wird der eigentliche Sensor in Form der Bragg-Gitter-Messstellen im Lichtwellenleiter in seinem Führungselement im Inneren eines Trägerrohrs angebracht und von diesem gestützt und gehalten.

Dabei ist das Führungselement, bevorzugt ein Stahlröhrchen, aber beweglich angeordnet, was mechanische Beeinflussungen der Bragg-Gitter-Messstellen durch Veränderungen beispielsweise des Trägerrohrs verringert oder vermeidet.

Damit ist eine Temperatursensoranordnung geschaffen, die zur Verwendung in Gasturbinen geeignet ist und eine verteilte Temperaturmessung mit beispielsweise 10 oder 20 Bragg-Gitter-Messstellen in einem einzelnen Wellenleiter ermöglicht.

Quer zur axialen Richtung sind bevorzugt Messöffnungen im Trägerrohr vorgesehen, um einen Zugang von heißem Messgas zum Führungselement und damit zu den Bragg-Gitter-Messstellen zu ermöglichen. Die Löcher sind dabei bevorzugt als länglich und durchdringen das Trägerrohr.

Das Führungselement ist bevorzugt so im Trägerrohr angeordnet, dass die Bragg-Gitter-Messstellen im Bereich der Messöffnungen angeordnet sind. Besonders bevorzugt ist es, wenn die Bragg-Gitter-Messstellen mittig in den Messöffnungen angeordnet sind.

In bevorzugter Ausgestaltung ist der Lichtwellenleiter eine Glasfaser. Insbesondere ist der Lichtwellenleiter eine Glasfaser ohne Coating innerhalb des Führungselements.

Das Trägerrohr hat zweckmäßig eine Länge von wenigstens 50 cm, insbesondere eine Länge von 2 m oder 3 m. Dahingegen hat die Bohrung einen Durchmesser von bevorzugt zwischen 1,5 mm und 2,5 mm. Bei den angegebenen Maßen ist es sehr schwierig, die Bohrung über die gesamte Länge des Trägerrohres zu realisieren. Daher ist das Trägerrohr gemäß der Erfindung aus einem Außenteil und einem Innenteil zusammengesetzt.

Das Innenteil ist dabei aus Segmenten zusammengesetzt. Die Länge der einzelnen Segmente richtet sich dabei nach der Möglichkeit, eine Bohrung im Bereich von 2 mm Durchmesser zu realisieren. Beispielsweise beträgt die Länge der Segmente 30 cm.

Erfindungsgemäß weisen die Segmente Öffnungen für Passstifte auf, mittels derer sie orientierbar und zusammensteckbar sind. Hiermit ist ein einfacher und genauer Zusammenbau ermöglicht.

Bei einer Teilung in Außenteil und Innenteil weisen bevorzugt sowohl die Segmente bzw. die Innenrohre als auch das Außenteil die bereits beschriebenen Messöffnungen quer zur axialen Richtung auf. Dabei ist es zweckmäßig, wenn die Messöffnungen jeweils so angeordnet sind, dass im zusammengesetzten Zustand durchgängige Öffnungen entstehen.

Bevorzugt sind die Messöffnungen, insbesondere jene des Außenteils, an ihren Außenkanten abgerundet, um das Entstehen von Turbulenzen zu minimieren.

Bevorzugte, jedoch keinesfalls einschränkende Ausführungsbeispiele für die Erfindung werden nunmehr anhand der Figuren der Zeichnung näher erläutert. Dabei sind die Merkmale schematisiert dargestellt. Es zeigen
- Figur 1: eine beispielhafte Messlanze mit 10 Faser-Bragg-Gitter (FBG)-Messstellen,
- Figur 2: einen Ausschnitt aus der Messlanze im Bereich einer FBG-Messstelle
- Figur 3: einen Querschnitt durch den Aufbau der Messlanze,
- Figur 4: einen Querschnitt durch den Aufbau einer weiteren Messlanze.

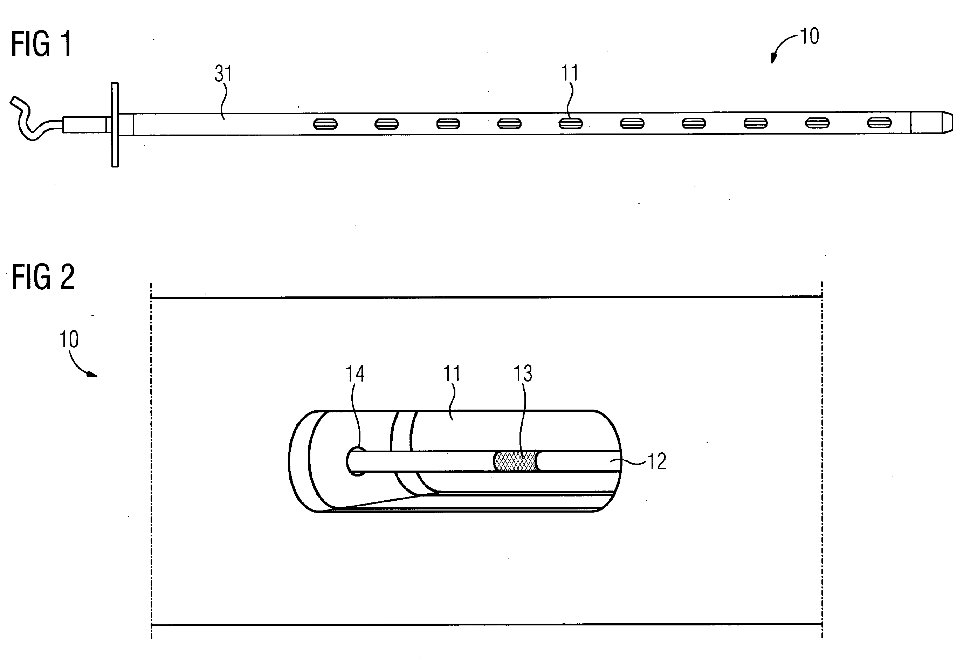

Figur 1 zeigt eine Messlanze 10 gemäß einem ersten Ausführungsbeispiel in ihrer Gesamtheit. Sie umfasst neben der Kabelzuführung unter anderem ein Außenrohr 31, in das in regelmäßigen Abständen längliche Messöffnungen 11 eingebracht sind. Die Messlanze 10 ist 3 m lang und umfasst 10 Messöffnungen 11 mit jeweiliger FBG-Messstelle 13.

Figur 2 zeigt einen vergrößerten Ausschnitt der Messlanze 10. Die Ausschnittsvergrößerung zeigt eine Messöffnung 11, die die gesamte Messlanze 10 quer durchdringt. Die Außenkante der Messöffnung 11 ist zur Verringerung von Turbulenzen abgerundet. Das Messgas kann so in günstiger Weise die Messlanze 10 an einer Stelle durchströmen. Dabei strömt das Messgas, also beispielsweise das Abgas in einer Turbine auch an einem Stahlröhrchen 12 vorbei, das in der Mitte der Messlanze 10 in einer Bohrung 14 beweglich geführt ist. Das Stahlröhrchen 12 weist im Bereich der Mitte der Messöffnung 11 eine Faser-Bragg-Gitter-Messstelle 13 auf.

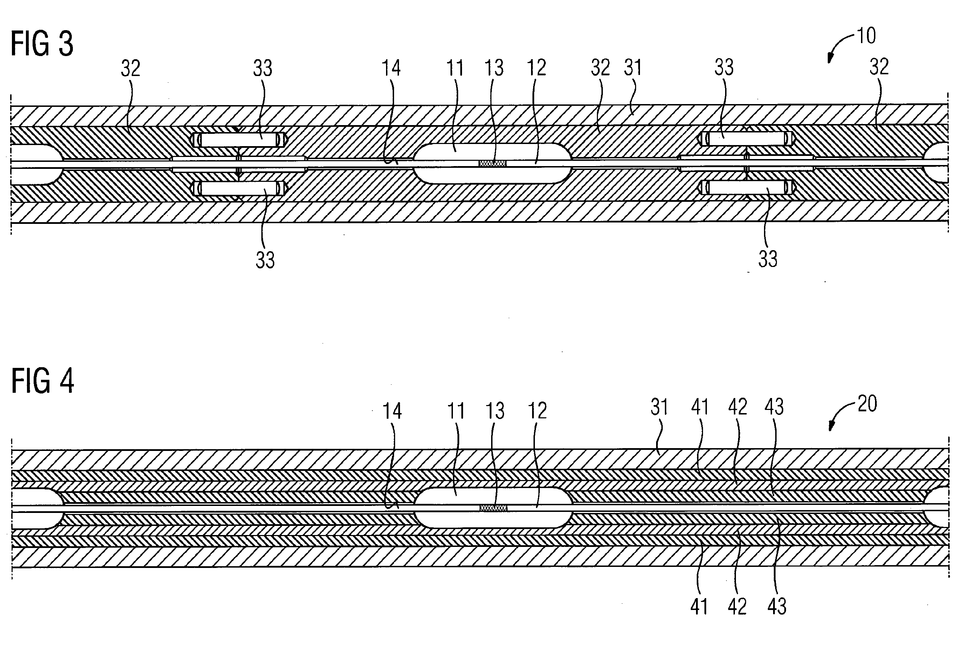

Die Schnittzeichnung der Figur 3 zeigt den Aufbau der Messlanze 10 genauer. Zur mechanischen Stabilisierung weist die Messlanze 10 das Außenrohr 31 auf. Das Außenrohr 31 erstreckt sich über nahezu die gesamte Länge der Messlanze 10.

Im Inneren des Außenrohrs 31 weist die Messlanze 10 eine Serie von 10 Innensegmenten 32 auf. Die Innensegmente 32 sind mittels Passstiften 33 ineinander gesteckt und orientiert. Die Innensegmente 32 weisen in ihrem Zentrum die Bohrung 14 auf, in der das Stahlröhrchen 12 geführt ist. Der Durchmesser der Bohrung 14 ist dabei so gewählt, dass das Stahlröhrchen 12 axial beweglich bleibt. Im vorliegenden Ausführungsbeispiel beträgt der Durchmesser der Bohrung 14 2 mm, während der Durchmesser des Stahlröhrchens 12 1,5 mm beträgt.

Die Innensegmente 32 weisen analog zum.Außenrohr 31 Messöffnungen 11 auf und sind so angeordnet, dass sich durchgängige Messöffnungen 11 in der Messlanze 10 ergeben.

Figur 4 zeigt einen alternativen Aufbau gemäß einem zweiten Ausführungsbeispiel für eine zweite Messlanze 20. Die zweite Messlanze 20 weist analog zur ersten Messlanze 10 ein Außenrohr 31 auf. Im Außenrohr 31 sind jedoch weitere Rohre 41, 42, 43 konzentrisch angeordnet. Diese Innenrohre 41, 42, 43 füllen das Außenrohr 31 bis auf einen Bereich, der der Bohrung 14 entspricht. Der konzentrische Aufbau aus einzelnen Innenrohren 41, 42, 43 wird dabei gewählt, da eine dünne Bohrung 14 von einem Durchmesser von etwa 2 mm in einem massiven Rohr von einem Durchmesser von beispielsweise 3 cm über eine Länge von 3 m technisch praktisch nicht realisierbar ist. Ebenso wie bei der ersten Messlanze 10 sind Messöffnungen 11 durch sämtliche Außen- und Innenrohre 31, 41, 42, 43 vorgesehen, so dass sich durchgängige Messöffnungen 11 in der Messlanze 10 ergeben. Das Stahlröhrchen 12 ist mit den Faser-Bragg-Gitter-Messstellen 13 ebenso wie bei der ersten Messlanze 10 in die Innenrohre 41, 42, 43 eingeschoben.

## Patentansprüche

1. Temperatursensoranordnung (10, 20) für eine Gasturbine, aufweisend
- ein Trägerrohr (31, 32, 41, 42, 43) mit einer Bohrung (14) in axialer Richtung,
- ein in der Bohrung (14) in axialer Richtung beweglich angeordnetes Führungselement (12),
- ein im Führungselement (12) angeordneter Lichtwellenleiter mit wenigstens einer Bragg-Gitter-Messstelle (13), wobei
- das Trägerrohr (31, 32, 41, 42, 43) aus einem Außenteil (31) und einem Innenteil (32, 41, 42, 43) besteht,
- das Innenteil (32, 41, 42, 43) aus Segmenten (32) zusammengesetzt ist, **dadurch gekennzeichnet, dass** die Segmente (32) jeweils höchstens die halbe Länge des Außenteils (31) aufweisen und
- die Segmente (32) Öffnungen für Passstifte (33) aufweisen, mittels derer sie orientierbar und zusammensteckbar sind.

2. Temperatursensoranordnung (10, 20) gemäß Anspruch 1, bei der das Trägerrohr (31, 32, 41, 42, 43) Messöffnungen (11) quer zur axialen Richtung aufweist, um einen Zugang von heißem Messgas zum Führungselement (12) und damit den Bragg-Gitter-Messstellen (13) zu ermöglichen.

3. Temperatursensoranordnung (10, 20) gemäß Anspruch 1 oder 2, bei der das Führungselement (12) so im Trägerrohr (31, 32, 41, 42, 43) angeordnet ist, dass die Bragg-Gitter-Messstellen (13) mittig in den Messöffnungen (11) angeordnet sind.

4. Temperatursensoranordnung (10, 20) gemäß einem der vorangehenden Ansprüche, wobei der Lichtwellenleiter eine Glasfaser ist, insbesondere eine Glasfaser ohne Coating im Bereich des Führungselements (12).

5. Temperatursensoranordnung (10, 20) gemäß einem der vorangehenden Ansprüche, wobei die Segmente (32) und das Außenteil (31) Öffnungen quer zur axialen Richtung aufweisen, derart angeordnet, dass im zusammengesetzten Zustand mit dem Außenteil (31) die durchgängigen Messöffnungen (11) entstehen.

6. Temperatursensoranordnung (10, 20) gemäß einem der vorangehenden Ansprüche, wobei die Messöffnungen (11) an ihren Außenkanten abgerundet sind.

7. Temperatursensoranordnung (10, 20) gemäß einem der vorangehenden Ansprüche, wobei das Führungselement (12) ein Stahlröhrchen (12) ist.

8. Temperatursensoranordnung (10, 20) gemäß einem der vorangehenden Ansprüche, wobei die Bohrung (14) einen Durchmesser von zwischen 1,5 mm und 2,5 mm hat.

## Claims

1. Temperature sensor arrangement (10, 20) for a gas turbine, having
- a support tube (31, 32, 41, 42, 43) with a bore (14) in an axial direction,
- a guide element (12) arranged movably in an axial direction in the bore (14), and
- an optical waveguide arranged in the guide element (12) and having at least one Bragg grating measurement point (13) in which
- the support tube (31, 32, 41, 42, 43) consists of an outer part (31) and an inner part (32, 41, 42, 43),
- the inner part (32, 41, 42, 43) is composed of segments (32), **characterized in that** the segments (32) respectively have at most half the length of the outer part (31), and
- the segments (32) have openings for alignment pins (33) by means of which they can be oriented and plugged together.

2. Temperature sensor arrangement (10, 20) according to Claim 1, in which the support tube (31, 32, 41, 42, 43) has measurement openings (11) transverse to the axial direction in order to enable hot measurement gas to access the guide element (12), and thus the Bragg grating measurement points (13).

3. Temperature sensor arrangement (10, 20) according to Claim 1 or 2, in which the guide element (12) is arranged in the support tube (31, 32, 41, 42, 43) such that the Bragg grating measurement points (13) are arranged centrally in the measurement openings (11).

4. Temperature sensor arrangement (10, 20) according to one of the preceding claims, in which the optical waveguide is a glass fiber, in particular a glass fiber without coating in the region of the guide element (12).

5. Temperature sensor arrangement (10, 20) according to one of the preceding claims, in which the segments (32) and the outer part (31) have openings transverse to the axial direction arranged in such a way that the continuous measurement openings (11) are produced in the assembled state with the outer part (31).

6. Temperature sensor arrangement (10, 20) according to one of the preceding claims, in which the measurement openings (11) are rounded off at their outer edges.

7. Temperature sensor arrangement (10, 20) according to one of the preceding claims, in which the guide element (12) is a steel tube (12).

8. Temperature sensor arrangement (10, 20) according to one of the preceding claims, in which the bore (14) has a diameter of between 1.5 mm and 2.5 mm.

## Revendications

1. Agencement (10, 20) formant capteur de température pour une turbine à gaz et comportant
- un tube (31, 32, 41, 42, 43) support ayant un alésage (14) dans la direction axiale,
- un élément (12) de guidage monté mobile dans la direction axiale dans l'alésage (14),
- un guide d'ondes lumineuses disposé dans l'élément (12) de guidage et ayant au moins un point (13) de mesure à réseau de Bragg,
dans lequel
- le tube (31, 32, 41, 42, 43) support est constitué d'une partie (31) extérieure et d'une partie (32, 41, 42, 43) intérieure,
- la partie (32, 41, 42, 43) intérieure est composé de segments (32),
**caractérisé en ce que**
- les segments (32) ont respectivement au plus la moitié de la longueur de la partie (31) extérieure et
- les segments (32) ont des ouvertures pour des tenons (33), au moyen desquels ils peuvent être orientés et emmanchés.

2. Agencement (10, 20) formant capteur de température suivant la revendication 1, dans lequel le tube (31, 32, 41, 42, 43) support a des ouvertures (11) de mesure transversalement à la direction axiale pour rendre possible un accès de gaz de mesure chaud à l'élément (32) de guidage et ainsi aux points (13) de mesure à réseau de Bragg.

3. Agencement (10, 20) formant capteur de température suivant la revendication 1 ou 2, dans lequel l'élément (12) de guidage est disposé dans le tube (31, 32, 41, 42, 43) support de manière à ce que les points (13) de mesure à réseau de Bragg soient disposés au milieu dans les ouvertures (11) de mesure.

4. Agencement (10, 20) formant capteur de température suivant l'une des revendications précédentes, dans lequel le guide d'ondes lumineuses est une fibre de verre, notamment une fibre de verre sans gaine dans la partie de l'élément (12) de guidage.

5. Agencement (10, 20) formant capteur de température suivant l'une des revendications précédentes, dans lequel les segments (32) et la partie (31) extérieure ont des ouvertures transversalement à la direction axiale de manière à créer, à l'état assemblé avec la partie (31) extérieure, des ouvertures (11) de mesure traversantes.

6. Agencement (10, 20) formant capteur de température suivant l'une des revendications précédentes, dans lequel les ouvertures (11) de mesure sont arrondies sur leur bord extérieur.

7. Agencement (10, 20) formant capteur de température suivant l'une des revendications précédentes, dans lequel l'élément (12) de guidage est un petit tube (32) en acier.

8. Agencement (10, 20) formant capteur de température suivant l'une des revendications précédentes, dans lequel l'alésage (14) a un diamètre compris entre 1,5 mm et 2,5 mm.
